# EUROPEAN PATENT SPECIFICATION

(11) **EP 4 209 810 B1**
(45) Date of publication and mention of the grant of the patent: **12.08.2026**
(21) Application number: 20952470.1
(22) Date of filing: 04.09.2020
(51) Int. Cl.: G02B 6/02, G02B 6/036

(54) **MULTICORE OPTICAL FIBER**
MEHRKERN-GLASFASER
FIBRE OPTIQUE À ÂMES MULTIPLES

(43) Date of publication of application: 12.07.2023
(73) Proprietor: NTT, Inc., Tokyo 100-8116 (JP)
(72) Inventor: MATSUI, Takashi, Musashino-shi, Tokyo 180-8585 (JP); NAKAJIMA, Kazuhide, Musashino-shi, Tokyo 180-8585 (JP); SAKAMOTO, Taiji, Musashino-shi, Tokyo 180-8585 (JP); SAGAE, Yuto, Musashino-shi, Tokyo 180-8585 (JP)
(74) Representative: Bobbert & Partner Patentanwälte PartmbB
(86) International application number: PCT/JP2020/033643
(87) International publication number: WO 2022/049735

(56) References cited:
- WO-A1-2010/119930
- WO-A1-2013/051655
- WO-A1-2014/087974
- JP-A- 2013 088 458
- JP-A- 2013 097 173
- JP-A- 2015 212 791
- JP-A- 2019 152 865
- JP-B1- 6 715 372
- US-A1- 2011 206 331
- US-A1- 2011 274 398
- US-A1- 2012 163 801
- US-A1- 2013 039 627
- US-A1- 2013 243 384
- US-A1- 2021 003 773
- MATSUI TAKASHI ET AL: "Design and Applicability of Multi-Core Fibers With Standard Cladding Diameter", JOURNAL OF LIGHTWAVE TECHNOLOGY, IEEE, USA, vol. 38, no. 21, 25 June 2020 (2020-06-25), pages 6065 - 6070, XP011813701, ISSN: 0733-8724, [retrieved on 20201007], DOI: 10.1109/JLT.2020.3004824
- NOZOE SAKI ET AL: "Ultra-Low Crosstalk 125-[mu]m-Cladding Four-Hole Four-Core Fibers Fabricated by the Over-Cladding Bundled Rods Method", JOURNAL OF LIGHTWAVE TECHNOLOGY, IEEE, USA, vol. 37, no. 21, 1 November 2019 (2019-11-01), pages 5600 - 5608, XP011756384, ISSN: 0733-8724, [retrieved on 20191031], DOI: 10.1109/JLT.2019.2935546
- MING-JUN LI ET AL: "Multicore fiber for optical interconnect applications", 2012 17TH OPTO-ELECTRONICS AND COMMUNICATIONS CONFERENCE (OECC), IEEE, 2 July 2012 (2012-07-02), pages 564 - 565, XP032223132, ISBN: 978-1-4673-0976-9, DOI: 10.1109/OECC.2012.6276573

## Description

### [Technical Field]

The present disclosure relates to a multi-core optical fiber having a plurality of cores.

### [Background Art]

Rapid advances have been made in increasing speeds and reducing sizes of optical transceivers, and parallel transmission using a plurality of optical channels has been utilized. While a multi-core coated optical fiber ribbon has been generally used, a narrow-pitch coated optical fiber ribbon using a small-diameter optical fiber has been studied in order to achieve higher density.

In addition, application of a multi-core optical fiber (MCF) having a plurality of cores in a single fiber optical fiber has also been studied for further densification. Although a laser array and a photodetector array of an optical transceiver have increased density in the order of several tens µm due to advanced techniques such as silicon photonics, there is a limit to the reduction of a diameter size of an optical fiber, and an optical converter is required for connection with the optical fiber. On the other hand, since cores of a multi-core optical fiber can be arranged at intervals of several tens µm, direct connection with a high-density laser array and a high-density photodetector array is possible, and optical wiring with high-density and low-loss can be produced.

### [Citation List]

### [Patent Literature]

[PTL 1] Japanese Patent No. 6560806 B1
[PTL 2] Japanese Patent Application Publication No. 2020-115191 A

### [Non Patent Literature]

[NPL 1] T. Matsui, et al., "Design of multi-core fiber in 125 µm cladding diameter with full compliance to conventional SMF", in Proc. ECOC, Valencia, Spain, Sep. 2015, We.4.3.
[NPL 2] M.-J., Li, et al., "Multicore Fiber for Optical Interconnect Applications", in Proc. OECC, Busan, Korea, July 2012, 5E4-2
[NPL 3] T. Hayashi et al., "End-to-End Multi-Core Fibre Transmission Link Enabled by Silicon Photonics Transceiver with Grating Coupler Array", in Proc. ECOC, Gothenburg, Sweden, Sep.2017
[NPL 4]
   https://www.fujikura.co.jp/rd/gihou/backnumber/pages/_icsFile s/afieldfile/2017/06/06/130_R2.pdf

### [Summary of Invention]

### [Technical Problem]

However, as disclosed in PTL 1 and 2 and NPL 1, since a general multi-core optical fiber has cores arranged in a hexagonal close-packed form which is a different arrangement from those of laser arrays and photodetector arrays in an optical transceiver, there is a problem of necessity to use an optical converter. The multi-core optical fiber described in NPL 2 has a problem of impossibility to appropriate peripheral techniques, such as existing cables, thereto since a diameter of a cladding region is very large to make core spacing of the multi-core optical fiber sufficient. The multi-core optical fiber described in NPL 3 has a problem of poor compatibility with existing optical fibers and limitation on wavelength bands to be used since the multi-core optical fiber is optimized for use at 1.31 µm and particularly increased loss on a long wavelength side.

Furthermore, when considering direct coupling with a laser array, preferably, a beam diameter is sufficiently small as described in NPL 4. However, the multi-core optical fibers described in PTL 1 and 2 and NPL 1, 2, and 3 have a large mode field diameter relative to a beam diameter of a laser, since a spot size converter is required in order to obtain favorable coupling characteristics, and then there is a problem in terms of loss reduction and densification.

Related multi-core fibers with N core regions linearly arranged in a cross section, where N is a positive integer between 4 and 8, have been disclosed in US 2012/163801 A1 and in

Ming-Jun Li et al. "Multicore fiber for optical interconnect applications", 17TH OPTO-ELECTRONICS AND COMMUNICATIONS CONFERENCE (OECC), IEEE, 2 July 2012, pages 564-565.

In consideration thereof, an object of the present disclosure is to provide a high-density multi-core optical fiber with superior connectivity to a laser array and a photodetector array.

### [Solution to Problem]

In order to achieve the above-mentioned object, the present invention relates to a multi-core optical fiber as defined by appended claim 1.

### [Advantageous Effects of Invention]

According to the present disclosure, a high-density multi-core optical fiber with superior connectivity to a laser array and a photodetector array can be provided.

### [Brief Description of Drawings]

[Fig. 1A]

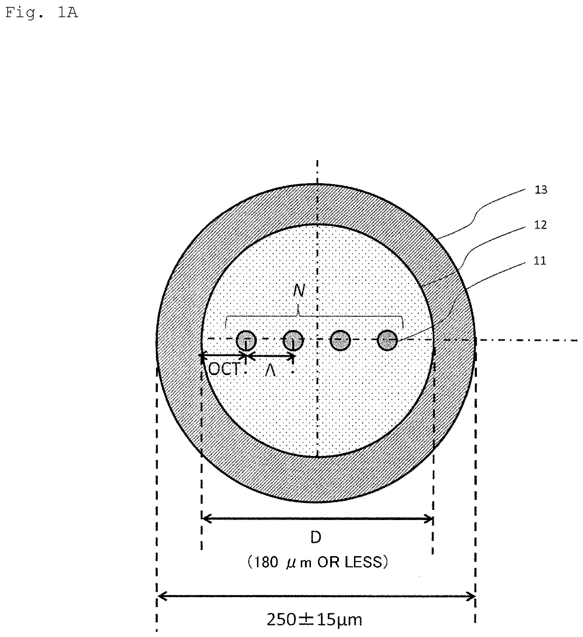

   Fig. 1A is a schematic view representing a cross-sectional structure of a multi-core optical fiber.
[Fig. 1B]

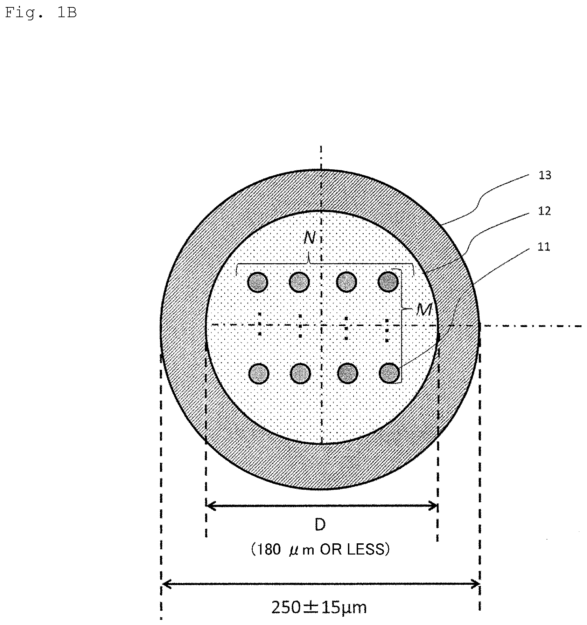

   Fig. 1B is a schematic diagram representing a cross-sectional structure of the multi-core optical fiber.
[Fig. 2A]

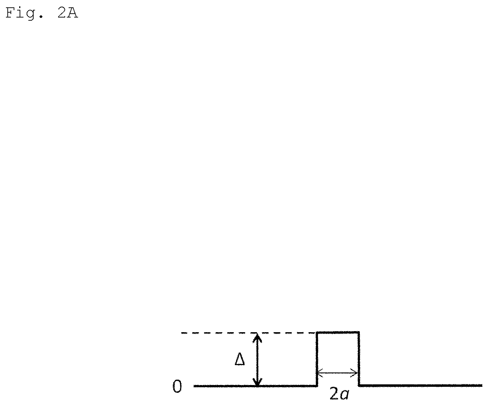

   Fig. 2A is a diagram showing a refractive index distribution of a core region of the multi-core optical fiber.
[Fig. 2B]

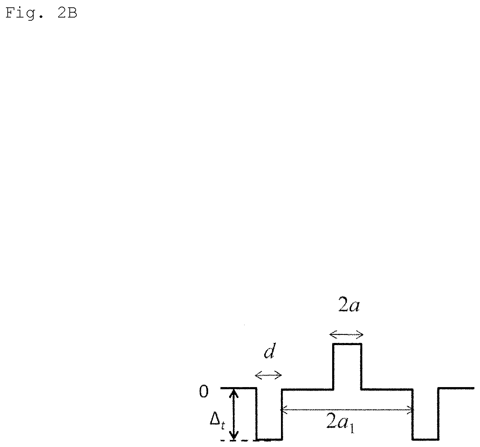

   Fig. 2B is a diagram showing a refractive index distribution of a core region of the multi-core optical fiber.
[Fig. 3]

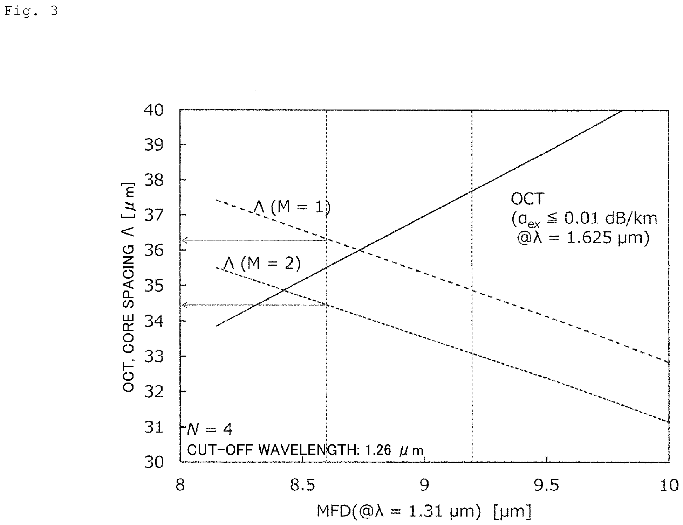

   Fig. 3 is a diagram showing a relationship between an MFD and a core region of the multi-core optical fiber.
[Fig. 4]

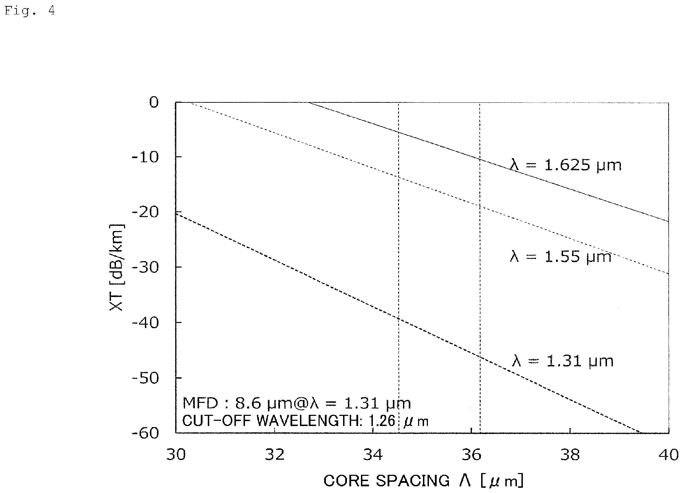

   Fig. 4 is a diagram showing a relationship between core spacing and XT of the multi-core optical fiber.
[Fig. 5]

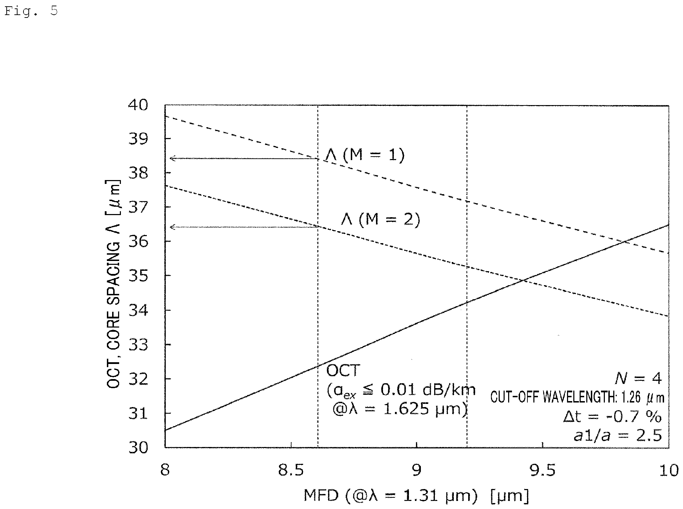

   Fig. 5 is a diagram showing a relationship between an MFD and a core region of the multi-core optical fiber.
[Fig. 6]

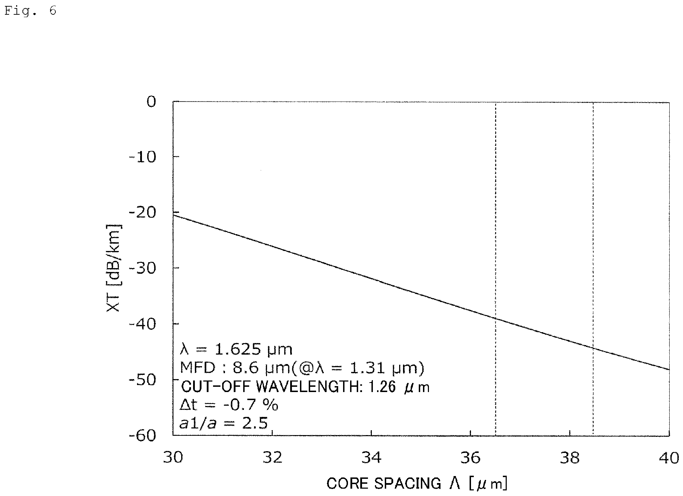

   Fig. 6 is a diagram showing a relationship between core spacing and XT of the multi-core optical fiber.
[Fig. 7]

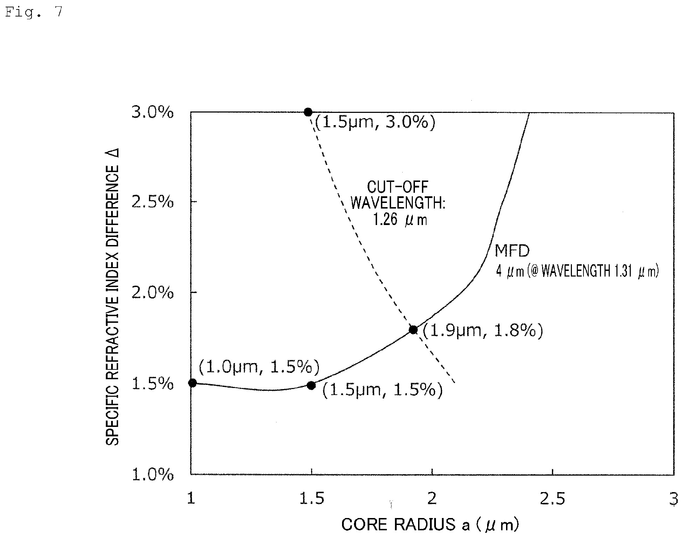

   Fig. 7 is a diagram describing a core structure of the multicore optical fiber.
[Fig. 8]

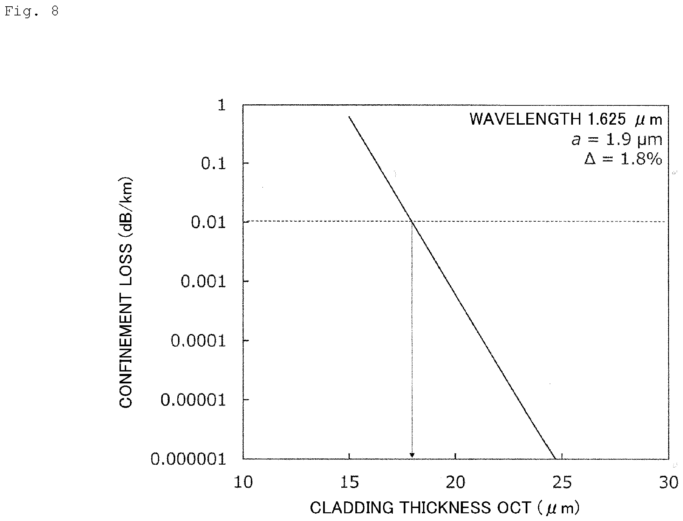

   Fig. 8 is a diagram representing a relationship between cladding thickness and a confinement loss of the multi-core optical fiber.
[Fig. 9]

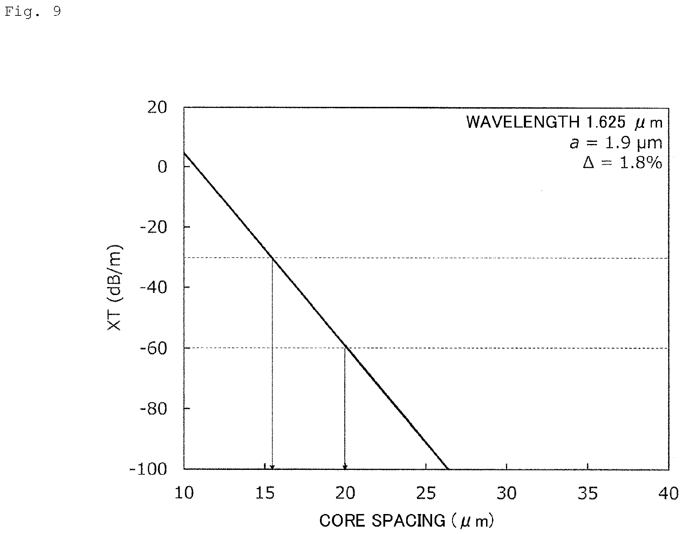

   Fig. 9 is a diagram showing a relationship between core spacing and XT of the multi-core optical fiber.
[Fig. 10]

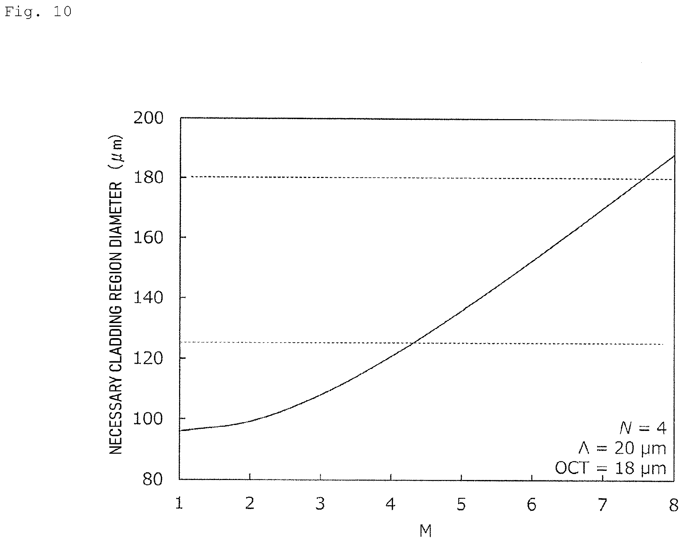

   Fig. 10 is a diagram showing a minimum cladding diameter with respect to the number M of groups of core regions of the multi-core optical fiber.
[Fig. 11]

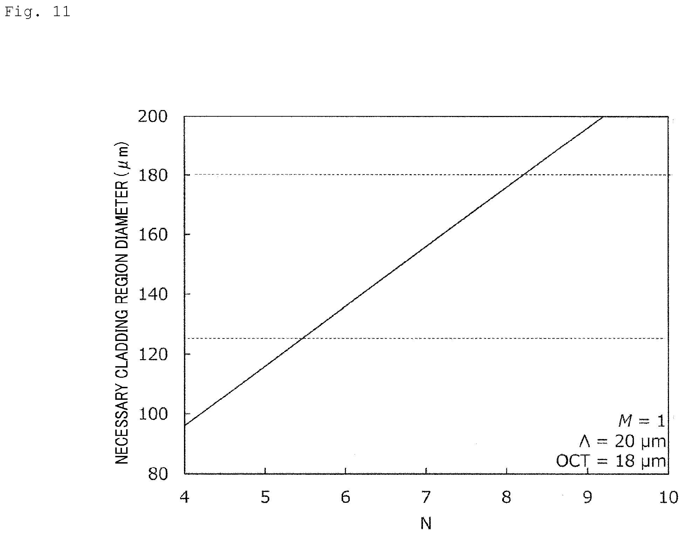

   Fig. 11 is a diagram showing a minimum cladding diameter with respect to the number N of linearly arranged cores of the multi-core optical fiber.

### [Description of Embodiments]

Hereinafter, embodiments of the present disclosure will be described in detail with reference to the drawings. Note that the present disclosure is not limited to the embodiments presented below. The embodiments are merely illustrative and the present disclosure can be implemented with a variety of modifications and improvements made thereto on the basis of the knowledge of a person skilled in the art. Note that constituent elements designated by the same reference signs in the present description and in the drawings refer to the same constituent elements.

### (First embodiment)

Figs. 1A and 1B show schematic views of a cross-sectional structure of a multi-core optical fiber according to the present disclosure. In Figs. 1A and 1B, reference sign 11 denotes a core region, 12 denotes a cladding region, and 13 denotes a coating region.

In Figs. 1A and 1B, the multi-core optical fiber includes the core regions 11, the cladding region 12, and the coating region 13. The cladding region 12 surrounds the core regions 11 and has a refractive index lower than any of the core regions 11. The coating region 13 surrounds the cladding region 12.

In Fig. 1A, the multi-core optical fiber includes one group consisting of N (where N is a positive integer between 4 and 8) core regions on a straight line which passes through a center of the cladding region, inside a cross section. Fig. 1B includes M (where M is a positive integer of 1 or larger) groups each consisting of N core regions linearly arranged inside the cross section of the multi-core optical fiber. In Figs. 1A and 1B, two one-dot chain lines depict two imaginary lines orthogonal to each other at the center of the cladding region. In each of the multi-core optical fibers, the plurality of core regions are arranged line-symmetrically with respect to both of the two imaginary lines.

A laser array or a photodetector array is linearly arranged, or linear arrays are arranged in layers. By arranging the cores as shown in Fig. 1A or Fig. 1B, the multi-core optical fiber according to the present disclosure can be directly connected to the laser array, the photodetector array, or the linear arrays.

A diameter of the coating region is 235 µm or more and 265 µm or less and a diameter of the cladding is 180 µm or less. Setting the diameter of the coating region to 235 µm or more and 265 µm or less produces the same standard as that of existing optical fibers and then the multicore optical fiber according to the present disclosure can be applied to existing optical cables. In addition, in consideration of the fact that there are optical fibers having a diameter of the coating region of 180 µm or more and 220 µm or less as compared to a diameter of the cladding region of 125 µm, a thickness of the cover of at least 27.5 µm or more is sufficient. On the other hand, considering that the lower limit of the diameter of the coating region of the optical fiber according to the present invention is 235 µm, the diameter of the cladding region needs to be 180 µm or less in order to make the thickness of the cover 27.5 µm or more.

In addition, setting the diameter of the cladding region to 125 ± 1 µm makes the diameter equivalent to the diameter of the cladding region of existing optical fibers and is more preferable. In this state, the diameter of the coating region may be 180 µm or more and 220 µm or less as described above, in addition to a general range of 235 µm or more and 265 µm or less.

As described above, the multi-core optical fiber according to the present disclosure has superior connectivity to a laser array and a photodetector array and a high-density multi-core optical fiber can be provided.

### (Second embodiment)

Figs. 2A and 2B show a refractive index distribution of core regions of the multi-core optical fiber according to the present disclosure. Fig. 2A shows a step index type refractive index distribution, and has a center core with a radius "a" and a specific refractive index difference Δ. A structure of the multi-core optical fiber shown in Fig. 2A is excellent in manufacturability and stability of the optical fiber. Fig. 2B shows a trench type refractive index distribution, and has a trench that has a width "d" and a specific refractive index difference Δt being lower than that of a cladding region and is at a position separated by a1 from the center around a center core with a radius of "a". A structure of the multicore optical fiber shown in Fig. 2B is excellent in terms of a light confinement effect, XT (CrossTalk) in the multi-core optical fiber can be reduced, and a high density core arrangement can be performed.

When optical characteristics of each core such as those shown in Figs. 2A and 2B are compatible with those of existing optical fibers, the multi-core optical fiber according to the present disclosure can be wired in a same manner as existing optical fibers are wired.

Fig. 3 shows a relationship between a mode field diameter (MFD) and a core region of the multi-core optical fiber according to the present disclosure. In Fig. 3, an abscissa represents an MFD at a wavelength of 1.31 µm and an ordinate represents a cladding thickness (OCT: Outer Cladding Thickness) or a distance between centers of core regions (core spacing λ) OCT means a minimum distance from a center of a core region that is the closest to the cladding region to the cladding region. Thereat, the refractive index distribution of each core is a step index type, and a core structure is set so that a cut-off wavelength is 1.26 µm or less. A solid line represents an OCT at which confinement loss is 0.01 dB/km or less at a wavelength of 1.625 µm for each MFD.

When a value of the OCT is equal to or more than that of the solid line, excessive loss can be sufficiently suppressed in an entire communication wavelength band. A dashed line and a dotted line represent, with respect to N = 4 on a satisfied OCT condition, necessary core spacing for realizing core arrangements of M = 1 and M = 2, respectively, with a diameter of the cladding region being 180 µm or less. When the MFD is set to 8.6 µm or more, which is set in consideration of an MFD ranging from 8.6 µm to 9.2 µm of a general-purpose single-mode optical fiber at a wavelength of 1.31 µm and connectivity with a single-mode optical fiber, as shown in Fig. 3, the distance between centers of core regions must be 36.2 µm or less with respect to M = 1 and that the distance between centers of core regions must be 34.5 µm or less with respect to M = 2.

Fig. 4 shows a relationship between core spacing and XT of the multi-core optical fiber according to the present disclosure. In Fig. 4, an abscissa represents a distance between centers of core regions (core spacing A) and an ordinate represents XT. Here, a core structure is a step index type, and an MFD is set to 8.6 µm at a wavelength of 1.31 µm and a cut-off wavelength is set to 1.26 µm or less. A solid line, a dashed line, and a dotted line in the diagram respectively denote wavelengths of 1.625, 1.55, and 1.31 µm.

When the distance between centers of core regions is set to 36.2 µm or less and 34.5 µm or less, individually, on the basis of Fig. 3, XT turns to be respectively -11 dB/km or more and -6 dB/km or more at a wavelength of 1.625 µm. Considering the fact that XT of about -15 dB is allowed in the IM-DD (Intensity Modulation-Direct Detection) method, M = 1, 2 in full band can be applied to transmission distances of about 300 m and 100 m at maximum, respectively. As shown in Fig. 4, on a shorter wavelength side than 1.625 µm, a lower XT can be obtained and, for example, the influence of XT can be ignored even at a transmission distance of several km or more at wavelengths of 1.31 and 1.55 µm.

Fig. 5 is a diagram showing a relationship between an MFD and a core region of the multi-core optical fiber according to the present disclosure. In Fig. 5, an abscissa represents an MFD at a wavelength of 1.31 µm and an ordinate represents a cladding thickness (OCT) or a distance between centers of core regions (core spacing A). Here, the refractive index distribution of each core is a trench type, and a core structure is set so that a cut-off wavelength is 1.26 µm or less. In Fig. 2B, a1/a is set to 2.5, d/a is set to 1, and Δt is set to -0.7%. A solid line represents a cladding thickness (OCD) that keeps confinement loss 0.01 dB/km or less at a wavelength of 1.625 µm for each MFD.

When a value of the OCT is equal to or more than that of the solid line, excessive loss can be sufficiently suppressed in the entire communication wavelength band. A dashed line and a dotted line represent, with respect to N = 4 on a satisfied OCT condition, a necessary distance between centers of core regions (core spacing A) for realizing core arrangements of M = 1 and M = 2, respectively, with a diameter of the cladding region being 180 µm or less. Fig. 5 shows that the distance between centers of core regions (core spacing A) must be 38.5 µm or less with respect to M = 1 and that the distance between centers of core regions (core spacing A) must be 36.5 µm or less with respect to M = 2.

Fig. 6 shows a relationship between core spacing and XT of the multi-core optical fiber according to the present disclosure. In Fig. 6, an abscissa represents a distance between centers of core regions (core spacing A) and an ordinate represents XT. Here, a core structure is a trench type, and an MFD is set to 8.6 µm at a wavelength of 1.31 µm and a cut-off wavelength is set to 1.26 µm or less.

When the distance between centers of core regions is set to 38.5 µm or less and 36.5 µm or less, individually, on the basis of Fig. 5, XT turns to be respectively -45 dB/km or more and -39 dB/km or more at a wavelength of 1.625 µm. Considering the fact that a lower XT can be obtained on a shorter wavelength side than 1.625 µm, an influence of XT can be ignored even at a transmission distance of 10 km or more using a trench type.

As described above, the multi-core optical fiber according to the present disclosure has superior connectivity to a laser array and a photodetector array and a high-density multi-core optical fiber can be provided. Further, by using the multicore optical fiber according to the present disclosure, low-loss optical interconnection can be realized.

### (Third embodiment)

A core structure of the multi-core optical fiber according to the present disclosure will be described with reference to Fig. 7. In Fig. 7, an abscissa represents a core radius "a" and an ordinate represents a specific refractive index difference Δ between a core and a cladding region. A refractive index distribution of the core region of the multicore optical fiber of the present disclosure described in the third embodiment is a step index type.

In a relatively short optical interconnection of around several tens cm such as in a board, a laser array and a wiring optical fiber are expected to be directly connected and wired. According to NPL 4, an optical fiber can be coupled to a laser array in a highly efficient manner when the MFD of the optical fiber is around 4 µm or less.

In Fig. 7, a solid line represents a core structure of which an MFD is 4 µm at a wavelength of 1.31 µm, and the MFD is 4 µm or less in an upper left region relative to the solid line. A dashed line represents a core structure of which a cut-off wavelength is 1.26 µm, and a single-mode operation is obtained in a communication wavelength band (with a wavelength range of 1.26 µm or more and 1.625 µm or less) in a lower left region relative to the dashed line. Therefore, the MFD can be reduced to 4 µm or less in an upper left region surrounded by the solid line and the dashed line and a single-mode operation in the communication wavelength band can be obtained. In detail, the region is an inner region of a polygon surrounded by • marks (black dot marks) in Fig. 7.

In other words, setting the values in the upper left region surrounded by the solid line and the dashed line in Fig. 7 and, particularly, setting "a" to 1.9 µm or less and Δ to 1.8% or more, coupling efficiency with a laser array can be enhanced.

Fig. 8 is a diagram representing a relationship between cladding thickness and a confinement loss of the multi-core optical fiber according to the present disclosure. An abscissa represents a cladding thickness (OCT) and an ordinate represents a confinement loss. In the core structure, "a" is set to 1.9 µm and Δ to 1.8% to make the MFD 4 µm and the wavelength is set to 1.625 µm. Fig. 8 shows that confinement loss decreases as the OCT increases. Here, when the confinement loss is 0.01 dB/km or less, the confinement loss is conceivably sufficiently smaller than a loss inherent to the optical fiber. Therefore, from Fig. 8, OCT must be 18 µm or more. Since the shorter the wavelength, the smaller the confinement loss, a low confinement loss can be obtained in the entire communication wavelength band under the above conditions. In addition, since the smaller the MFD, the smaller the confinement loss, setting the OCT to 18 µm or more results in a confinement loss equal to or less than that of Fig. 8 at the MFD of less than 4 µm.

Fig. 9 shows a relationship between core spacing and XT of the multi-core optical fiber according to the present disclosure. In Fig. 9, an abscissa represents a distance between centers of core regions (core spacing A) and an ordinate represents XT. A core structure and a wavelength are the same as those in Fig. 8.

XT linearly decreases as core spacing increases. Here, assuming that a transmission distance of an optical interconnection using the optical fiber according to the present disclosure is about several tens of cm in a board, XT is preferably -30 dB/km or less, and as shown in Fig. 9, core spacing needs to be approximately 16 µm or more. Here, since the shorter the wavelength, the smaller the XT, an even smaller XT is required in the communication wavelength band. In addition, since the smaller the MFD, the smaller an interference between cores and the smaller the XT, by setting the core spacing to 16 µm or more, XT characteristics equal to or less than that of Fig. 9 is obtained at the MFD of 4 µm or less. Furthermore, by setting the core spacing to 20 µm or more, the influence of XT can be ignored even when 1 km or less.

Fig. 10 shows a diameter of a smallest cladding region with respect to the number M of groups of core regions of the multi-core optical fiber according to the present disclosure. An OCT and core spacing λ are respectively set to 18 µm and 20 µm on the basis of Figs. 8 and 9. Here, the core spacing λ, the OCT, and the diameter D of the cladding region satisfy the following relationship with respect to the number N of the core regions and the number M of the groups of the core regions in Figs. 1A and 1B.
[Math. 1] $2 OCT + Λ \sqrt{{\left(N-1\right)}^{2} + {\left(M-1\right)}^{2}} = D$

When OCT and λ are within ranges of 18 µm or more and 20 µm or more, respectively, with N and M being freely selected numbers, D must be 180 µm or less. Setting D to 125 ± 1 µm results in a diameter of the cladding region being the same as that of an existing optical fiber and is more preferable. In Fig. 10, N = 4 is adopted. In this state, it is shown that the diameter of the cladding region is 180 µm or less when M is 7 or less. Further, it is shown that N = 4 core regions can be arranged by setting the diameter of the cladding region to 125 µm when M is 4 or less.

Fig. 11 shows a minimum diameter of a cladding region with respect to the number N of linearly arranged cores of the multi-core optical fiber according to the present disclosure. In Fig. 11, an abscissa represents the number N of cores arranged linearly and the ordinate represents a minimum diameter of a required cladding region.

In Fig. 11, an OCT and core spacing A are set in a similar manner to Fig. 10 and M = 1 is adopted. Fig. 11 shows that, when M = 1, eight cores at maximum can be arranged on a straight line with D being 180 µm or less. In addition, it is shown that five cores at maximum can be arranged on a straight line with D being 125 µm.

As described above, the multi-core optical fiber according to the present disclosure has superior connectivity to a laser array and a photodetector array and a high-density multi-core optical fiber can be provided. Further, by using the multicore optical fiber according to the present disclosure, low-loss optical interconnection can be realized.

### [Industrial Applicability]

The present disclosure can be applied to the information and communication industry.

### [Reference Signs List]

- 11: Core region
- 12: Cladding region
- 13: Coating region

## Claims

1. A multi-core optical fiber, comprising:
M, where M is a positive integer of 1 or larger, group(s) each consisting of N core regions (11) linearly arranged in a cross section;
a cladding region (12) that surrounds the plurality of core regions (11) and has a refractive index lower than any of the plurality of core regions (11); and
a coating region (13) that surrounds the cladding region (12),
wherein
the plurality of core regions (11) are arranged in line symmetry with respect to both imaginary lines orthogonal to each other at a center of the cladding region (12),
a diameter of the cladding region (12) is 180 µm or less,
wherein the multi-core optical fiber has an outer cladding thickness at which a confinement loss is 0.01 db/km or less at a wavelength of 1.625 µm for each mode field diameter (MFD),
wherein the outer cladding thickness is a minimum distance from a center of a core region (11) that is the closest to the cladding region (12),
wherein
a diameter of the coating region (13) is 235 µm or more and 265 µm or less and
N is a positive integer between 4 and 8.

2. The optical fiber according to claim 1, wherein
a refractive index distribution of the plurality of core regions (11) is a step index type,
N is 4 and M is 1,
a distance between centers of the plurality of core regions (11) is 36.2 µm or less,
a mode field diameter at a wavelength of 1.31 µm is 8.6 µm or more and 9.2 µm or less, and
a cut-off wavelength is 1.26 µm or less.

3. The optical fiber according to claim 1, wherein
a refractive index distribution of the plurality of core regions (11) is a step index type,
N is 4 and M is 2,
a distance between centers of the plurality of core regions (11) is 34.5 µm or less,
a mode field diameter at a wavelength of 1.31 µm is 8.6 µm or more and 9.2 µm or less, and
a cut-off wavelength is 1.26 µm or less.

4. The optical fiber according to claim 1, wherein
a refractive index distribution of the plurality of core regions (11) is a trench type,
N is 4 and M is 1,
a distance between centers of the plurality of core regions (11) is 38.5 µm or less,
a mode field diameter at a wavelength of 1.31 µm is 8.6 µm or more and 9.2 µm or less, and
a cut-off wavelength is 1.26 µm or less.

5. The optical fiber according to claim 1, wherein
a refractive index distribution of the plurality of core regions (11) is a trench type,
N is 4 and M is 2,
a distance between centers of the plurality of core regions (11) is 36.5 µm or less,
a mode field diameter at a wavelength of 1.31 µm is 8.6 µm or more and 9.2 µm or less, and
a cut-off wavelength is 1.26 µm or less.

## Patentansprüche

1. Eine Mehrkern-Lichtleitfaser, umfassend:
M, wobei M eine positive ganze Zahl von 1 oder größer ist, Gruppe(n), die jeweils aus N in einem Querschnitt linear angeordneten Kernbereichen (11) bestehen;
einen Mantelbereich (12), der die Vielzahl von Kernbereichen (11) umgibt und einen Brechungsindex aufweist, der niedriger ist als jeder der Vielzahl von Kernbereichen (11); und
einen Beschichtungsbereich (13), der den Mantelbereich (12) umgibt, wobei
die Vielzahl von Kernbereichen (11) in Liniensymmetrie bezüglich beider zueinander orthogonaler imaginärer Linien an einem Zentrum des Mantelbereichs (12) angeordnet ist,
ein Durchmesser des Mantelbereichs (12) 180 µm oder weniger beträgt,
wobei die Mehrkern-Lichtleitfaser eine äußere Manteldicke aufweist, bei der ein Einschlussverlust 0,01 dB/km oder weniger bei einer Wellenlänge von 1,625 µm für jeden Modenfelddurchmesser (MFD) beträgt,
wobei die äußere Manteldicke ein minimaler Abstand von einem Zentrum eines Kernbereichs (11), der dem Mantelbereich (12) am nächsten liegt, bis zum Mantelbereich (12) ist,
wobei
ein Durchmesser des Beschichtungsbereichs (13) 235 µm oder mehr und 265 µm oder weniger beträgt und
N eine positive ganze Zahl zwischen 4 und 8 ist.

2. Die Lichtleitfaser nach Anspruch 1, wobei
eine Brechungsindexverteilung der Vielzahl von Kernbereichen (11) vom Stufenindex-Typ ist,
N=4 ist und M=1 ist,
ein Abstand zwischen Zentren der Vielzahl von Kernbereichen (11) 36,2 µm oder weniger beträgt,
ein Modenfelddurchmesser bei einer Wellenlänge von 1,31 µm 8,6 µm oder mehr und 9,2 µm oder weniger beträgt, und
eine Grenzwellenlänge 1,26 µm oder weniger beträgt.

3. Die Lichtleitfaser nach Anspruch 1, wobei
eine Brechungsindexverteilung der Vielzahl von Kernbereichen (11) vom Stufenindex-Typ ist,
N=4 ist und M=2 ist,
ein Abstand zwischen Zentren der Vielzahl von Kernbereichen (11) 34,5 µm oder weniger beträgt,
ein Modenfelddurchmesser bei einer Wellenlänge von 1,31 µm 8,6 µm oder mehr und 9,2 µm oder weniger beträgt, und
eine Grenzwellenlänge 1,26 µm oder weniger beträgt.

4. Die Lichtleitfaser nach Anspruch 1, wobei
eine Brechungsindexverteilung der Vielzahl von Kernbereichen (11) vom Graben-Typ ist,
N=4 ist und M=1 ist,
ein Abstand zwischen Zentren der Vielzahl von Kernbereichen (11) 38,5 µm oder weniger beträgt,
ein Modenfelddurchmesser bei einer Wellenlänge von 1,31 µm 8,6 µm oder mehr und 9,2 µm oder weniger beträgt, und
eine Grenzwellenlänge 1,26 µm oder weniger beträgt.

5. Die Lichtleitfaser nach Anspruch 1, wobei
eine Brechungsindexverteilung der Vielzahl von Kernbereichen (11) vom Graben-Typ ist,
N=4 ist und M=2 ist,
ein Abstand zwischen Zentren der Vielzahl von Kernbereichen (11) 36,5 µm oder weniger beträgt,
ein Modenfelddurchmesser bei einer Wellenlänge von 1,31 µm 8,6 µm oder mehr und 9,2 µm oder weniger beträgt, und
eine Grenzwellenlänge 1,26 µm oder weniger beträgt.

## Revendications

1. Une fibre optique multicœur, comprenant :
M, où M est un nombre entier positif supérieur ou égal à 1, un ou plusieurs groupes chacun composé de N zones de cœur (11) agencées linéairement en section transversale;
une zone de gainage (12) qui entoure les multiples zones de cœur (11) et qui présente un indice de réfraction inférieur à celui de chacune des zones de cœur (11); et
une zone de revêtement (13) qui entoure la zone de gainage (12),
où
les multiples zones de cœur (11) sont agencées en symétrie linéaire par rapport aux deux lignes imaginaires orthogonales l'une à l'autre à un centre de la zone de gaine (12),
un diamètre de la zone de gainage (12) est inférieur ou égal à 180 µm,
où la fibre optique multicœur possède une épaisseur de gainage externe à laquelle une perte de confinement est inférieure ou égale à 0,01 db/km à une longueur d'onde de 1,625 µm pour chaque diamètre de champ modal (MFD),
où l'épaisseur de gainage externe est une distance minimale depuis un centre d'une zone de cœur (11) le plus proche de la zone de gainage (12) à la zone de gainage (12),
où
un diamètre de la zone de revêtement (13) est supérieur ou égal à 235 µm et inférieur ou égal à 265 µm et
N est un nombre entier positif compris entre 4 et 8.

2. La fibre optique selon la première revendication, où
une distribution de l'indice de réfraction des multiples zones de cœur (11) est du type à indice en escalier,
N est 4 et M est 1,
une distance entre les centres des multiples zones de cœurs (11) est inférieure ou égale à 36,2 µm,
un diamètre de champ modal à une longueur d'onde de 1,31 µm est supérieur ou égal à 8,6 µm et inférieur ou égal à 9,2 µm, et
une longueur d'onde de coupure est inférieure ou égale à 1,26 µm.

3. La fibre optique selon la première revendication, où
une distribution de l'indice de réfraction des multiples zones de cœur (11) est du type à indice en escalier,
N est 4 et M est 2,
une distance entre les centres des multiples zones de cœur (11) est inférieure ou égale à 34,5 µm
un diamètre de champ modal à une longueur d'onde de 1,31 µm est supérieur ou égal à 8,6 µm et inférieur ou égal à 9,2 µm, et
une longueur d'onde de coupure est inférieure ou égale à 1,26 µm.

4. La fibre optique selon la première revendication, où
une distribution de l'indice de réfraction des multiples zones de cœurs (11) est du type à tranchée,
N est 4 et M est 1,
une distance entre les centres des multiples zones de cœurs (11) est inférieure ou égale à 38,5 µm,
un diamètre de champ modal à une longueur d'onde de 1,31 µm est supérieur ou égal à 8,6 µm et inférieur ou égal à 9,2 µm,
et
une longueur d'onde de coupure est inférieure ou égale à 1,26 µm.

5. La fibre optique selon la première revendication, où
une distribution de l'indice de réfraction des multiples zones de cœurs (11) est du type à tranchée,
N est 4 et M est 2,
une distance entre les centres des multiples zones de cœurs (11) est inférieure ou égale à 36,5 µm,
un diamètre de champ modal à une longueur d'onde de 1,31 µm est supérieur ou égal à 8,6 µm et inférieur ou égal à 9,2 µm, et
une longueur d'onde de coupure est inférieure ou égale à 1,26 µm.
